# DEMANDE DE BREVET EUROPEEN

(11) **EP 1 802 052 A1**
(43) Date de publication de la demande: **27.06.2007**
(21) Numéro de dépôt: 06126468.5
(22) Date de dépôt: 19.12.2006
(51) Int. Cl.: H04L 12/56

(54) **Optimisation d'utilisation de services dans des réseaux d'accés hybrides**

(30) Priorité: 26.12.2005 FR 0554092
(71) Demandeur: Alcatel Lucent, 75008 Paris (FR)
(72) Inventeur: Marilly, Emmanuel M., 91240, Saint Michel- sûr -Orge (FR); Martinot, Olivier, 91210, Draveil (FR); Saidi, Mohamed Adel, 92160, Antony (FR); Squedin, Sylvain, 91620, Nozay (FR)
(74) Mandataire: El Manouni, Josiane

(57) **Abrégé**

Un dispositif d'optimisation (D), pour un coeur de réseau de type IMS (RI) couplé à des applications de service et à au moins deux réseaux d'accès (R1-R3) de types différents, comprend des moyens de traitement (MT) couplés aux applications de service et chargés, lorsqu'un terminal d'utilisateur (T1) connecté à l'un des réseaux d'accès (R1) requiert l'accès à un service choisi, géré par l'une des applications de service, d'optimiser l'utilisation du service requis en fonction de règles définies par cet utilisateur et/ou par un opérateur de réseau d'accès auprès duquel l'utilisateur à contracté un abonnement choisi, des caractéristiques du service requis, et des capacités du terminal (T1) et/ou des caractéristiques de l'abonnement et/ou de chaque réseau d'accès susceptible de permettre l'accès du terminal (T1) au service requis.

## Description

L'invention concerne les réseaux d'accès hybrides, et plus précisément l'utilisation des services mis à la disposition des utilisateurs par les opérateurs des réseaux d'accès.

On entend ici par « réseaux d'accès hybrides » des ensembles d'au moins deux réseaux de communication de types différents, également appelés « multi-domaines », permettant à des terminaux d'utilisateurs et/ou des équipements de réseau d'établir des communications, et connectés à un coeur de réseau de type IMS (« IP Multimedia Subsystem » - sous-système multimédia sous protocole Internet (IP)). Il s'agira par exemple de réseaux à connectivité IP (tels que les réseaux GPRS, UMTS, WiFi, WiMax, WLAN ou xDSL, notamment) et/ou de réseaux traditionnels, comme les réseaux de téléphonie commutée de type PSTN (s'ils sont pourvus d'une passerelle vers un coeur de réseau IMS).

Le nombre de réseaux d'accès de types différents ne cesse d'augmenter. Parmi ces réseaux d'accès on peut notamment citer les réseaux fixes (par exemple xDSL ou câble), les réseaux mobiles ou cellulaires (par exemple GPRS, UMTS ou 4G), les réseaux nomades (par exemple, WiFi, WiMax), les réseaux de diffusion (par exemple DVB-T/H ou DMB). Ces réseaux d'accès appartenant généralement à des opérateurs différents, ils sont donc généralement gérés de façon séparée en ne tenant compte que de leurs propres caractéristiques et capacités, c'est-à-dire sans différencier les types des contenus qui proviennent d'autres réseaux d'accès et qu'ils sont fréquemment amenés à transporter.

Par exemple, lorsqu'un utilisateur, disposant d'un terminal (de communication) hybride ou multi-technologies, se trouve situé dans une zone où il peut se connecter à la fois à un réseau UMTS et à un réseau WiFi, il ne peut pas ou n'est pas en mesure de choisir la technologie d'accès qui est la mieux adaptée, en termes de coût et/ou de qualité de service (QoS) et/ou de rapidité, à un service qu'il souhaite utiliser, comme par exemple un service d'obtention ou de transmission de courriel (« e-mail »). De leur côté, les opérateurs des réseaux UMTS et WiFi concernés ne disposent pas toujours des capacités leur permettant de choisir le réseau ou la technologie d'accès qui est la mieux adaptée au service requis par un utilisateur, par exemple du fait du taux d'utilisation de leur réseau ou de contraintes de réseau liées à une politique.

L'invention a donc pour but d'améliorer la situation, et plus précisément de permettre l'optimisation de l'utilisation de services au sein de réseaux d'accès hybrides.

Elle propose à cet effet un dispositif d'optimisation, pour un coeur de réseau de type IMS couplé à des applications de service et à au moins deux réseaux d'accès de types différents, comprenant des moyens de traitement couplés aux applications de service et chargés, lorsqu'un terminal d'utilisateur connecté à l'un des réseaux d'accès requiert l'accès à un service choisi, géré par l'une des applications de service, d'optimiser l'utilisation de ce service requis en fonction de règles définies par cet utilisateur et/ou par l'opérateur de réseau d'accès auprès duquel l'utilisateur à contracté un abonnement choisi, des caractéristiques du service requis, et des capacités de son terminal et/ou des caractéristiques de son abonnement et/ou de chaque réseau d'accès susceptible de permettre l'accès de son terminal au service requis.

Le dispositif d'optimisation selon l'invention peut comporter d'autres caractéristiques qui peuvent être prises séparément ou en combinaison, et notamment :
- il peut comprendre des premiers moyens de mémorisation chargés de stocker les caractéristiques de service ;
- les caractéristiques de service peuvent être choisies parmi des besoins en terme de déploiement, des besoins en terme d'utilisation par un terminal d'utilisateur, au moins une technologie de réseau d'accès supportée, et des besoins en terme de qualité de service ;
- il peut comprendre des deuxièmes moyens de mémorisation chargés de stocker les caractéristiques des réseaux d'accès ;
- les caractéristiques de réseau d'accès peuvent être choisies parmi l'accessibilité, des performances théoriques, des performances disponibles, au moins un type de service supporté, au moins un mode de service supporté, et les coûts d'utilisation de chaque technologie d'accès supportée ;
- il peut comprendre des troisièmes moyens de mémorisation chargés de stocker les capacités des terminaux ;
- les capacités des terminaux peuvent être choisies parmi un type et au moins une technologie d'accès offerte ;
- il peut comprendre des quatrièmes moyens de mémorisation chargés de stocker les règles qui sont définies par les utilisateurs et chaque type d'abonnement (ou forfait) souscrit par chaque utilisateur auprès de chaque réseau d'accès ;
- il peut comprendre des cinquièmes moyens de mémorisation chargés de stocker les règles qui sont définies par les opérateurs de réseau d'accès ;
- ses moyens de traitement peuvent comporter un élément, choisi dans un groupe comprenant au moins un moteur de règles, un système expert et un système d'optimisation, et chargé, lorsqu'il reçoit la définition d'un service requis par un terminal d'utilisateur, d'accéder aux moyens de mémorisation de manière à déterminer chaque réseau d'accès accessible et optimal et chaque technologie de réseau d'accès à utiliser, compte tenu des besoins en termes de déploiement et d'utilisation du service et des règles définies par l'opérateur et/ou l'utilisateur des capacités du terminal de l'utilisateur et du type d'abonnement de ce dernier.

L'invention propose également un serveur, pour un coeur de réseau de type IMS couplé à des applications de service et à au moins deux réseaux d'accès de types différents, équipé d'un dispositif d'optimisation du type de celui présenté ci-avant.

L'invention est particulièrement bien adaptée, bien que de façon non exclusive, aux réseaux de communication hybrides à connectivité Internet (ou IP). Mais, d'une manière générale elle concerne tous les ensembles d'au moins deux réseaux de communication de types différents, y compris les ensembles comportant au moins un réseau de téléphonie commutée (par exemple de type PSTN) pourvu d'une passerelle vers un coeur de réseau IMS.

D'autres caractéristiques et avantages de l'invention apparaîtront à l'examen de la description détaillée ci-après, et des dessins annexés, sur lesquels :
- la figure 1 illustre de façon très schématique et fonctionnelle un exemple d'ensemble de réseaux d'accès hybrides connectés à un coeur de réseau de type IMS auquel est couplé un serveur d'application équipé d'un exemple de réalisation d'un dispositif d'optimisation selon l'invention,
- la figure 2 illustre de façon très schématique les principales étapes d'échange de messages entre les principaux équipements intervenant dans un premier exemple d'utilisation d'un service de communication à la demande d'un terminal d'utilisateur,
- la figure 3 illustre de façon très schématique les principales étapes d'échange de messages entre les principaux équipements intervenant dans un deuxième exemple d'utilisation d'un service de communication à la demande d'un terminal d'utilisateur, et
- la figure 4 illustre de façon très schématique les principales étapes d'échange de messages entre les principaux équipements intervenant dans un troisième exemple d'utilisation d'un service de communication à la demande d'un terminal d'utilisateur.

Les dessins annexés pourront non seulement servir à compléter l'invention, mais aussi contribuer à sa définition, le cas échéant.

L'invention a pour objet de permettre l'optimisation de l'utilisation de services au sein d'un ensemble d'au moins deux réseaux d'accès hybrides couplés à un coeur de réseau de type IMS.

Dans ce qui suit, on considère à titre d'exemple non limitatif que l'ensemble de réseaux d'accès hybrides comprend un réseau d'accès fixe R1, par exemple de type réseau téléphonique commuté PSTN à capacité haut débit (xDSL), un réseau d'accès mobile R2, par exemple de type UMTS, et un réseau d'accès nomade R3, par exemple de type WiFi.

Mais, l'invention n'est pas limitée à cet exemple d'ensemble de réseaux d'accès hybrides. Elle concerne en effet tout ensemble d'au moins deux réseaux d'accès hybrides, de type fixe et/ou mobile (ou cellulaire) et/ou nomade et/ou de diffusion, connectés à un coeur de réseau (ou « core network ») de type IMS (IP Multimedia Subsystem).

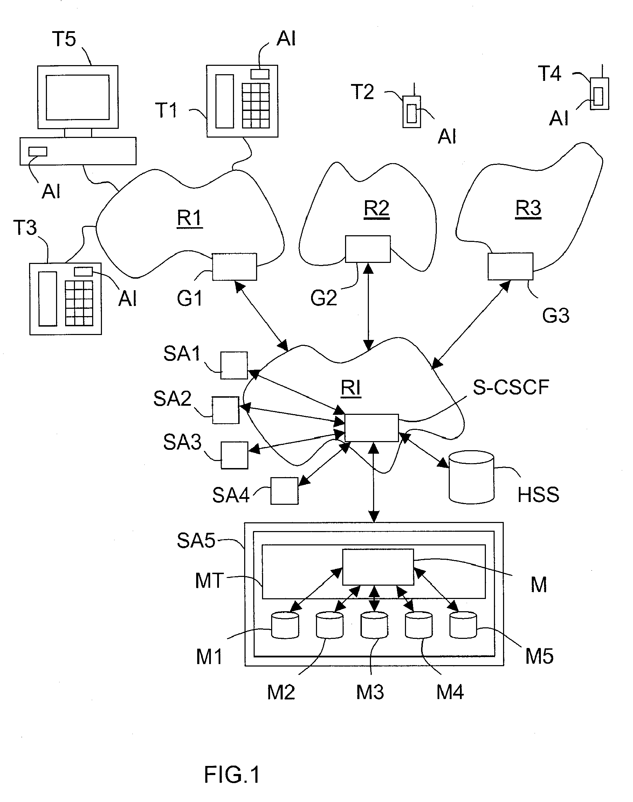

Par ailleurs, dans l'exemple illustré sur la figure 1 les trois réseaux d'accès Ri (i = 1 à 3, R1 à R3) offrent une connectivité IP, mais cela n'est pas obligatoire.

Des terminaux d'utilisateurs Tk, pourvus d'un agent IMS AI permettant leur fonctionnement dans un environnement IMS, sont connectés (ou peuvent se connecter) à l'un au moins des réseaux d'accès Ri. Ces terminaux Tk peuvent être mono-technologie (et dans ce cas ils ne peuvent se raccorder qu'à un unique type de réseau d'accès) ou multi-technologies (et dans ce cas ils peuvent se raccorder à plusieurs types différents de réseau d'accès).

Un même utilisateur peut disposer d'au moins deux types de terminaux Tk. Par exemple, un utilisateur peut disposer d'un téléphone fixe T1 raccordé au réseau d'accès R1 d'un premier opérateur auprès duquel il a contracté un premier abonnement et d'un téléphone mobile T2 pouvant se connecter au réseau d'accès R2 d'un second opérateur, auprès duquel il a contracté un premier abonnement, ou éventuellement d'un autre opérateur qui a passé un accord avec le second opérateur (lorsque le « roaming » est autorisé). Un utilisateur peut également avoir souscrit auprès d'un unique opérateur un abonnement concernant plusieurs technologies d'accès.

Dans l'exemple illustré, un premier utilisateur dispose d'un téléphone fixe T1 à agent IMS AI (éventuellement de type IP), raccordé au réseau d'accès R1, et d'un téléphone mobile T2 à agent IMS AI, de types UMTS et WiFi, raccordable aux réseaux d'accès R2 et R3, un deuxième utilisateur dispose d'un téléphone fixe T3 à agent IMS AI (éventuellement de type IP), raccordé au réseau d'accès R1, et d'un téléphone mobile T4 à agent IMS AI, de types UMTS et WiFi, raccordable aux réseaux d'accès R2 et R3, et un troisième utilisateur ne dispose que d'un ordinateur de bureau T5 à agent IMS AI raccordé à une ligne ADSL du réseau d'accès R1.

Les constituants d'un réseau IMS étant bien connus de l'homme de l'art, ils ne seront pas décrits ici en détails, comme c'est notamment le cas dans la spécification RFC 23.002 de l'organisme 3GPP, accessible sur le site Internet du 3GPP. Il est important de noter que les mécanismes mis en oeuvre par l'invention s'appliquent également à des coeurs de réseau à base de la technologie Core MMD (pour « MultiMedia Domain »), équivalente à la technologie IMS et définie par le 3GGP2.

Il est simplement rappelé ci-après quelques fonctionnalités d'éléments ou modules du coeur de réseau, utiles à la compréhension de l'invention.

Un réseau (ou domaine) IMS peut être raccordé à un réseau (ou domaine) de type paquet (« Packet Switched ») R2, comme par exemple un réseau UMTS, et/ou à un réseau de communication fixe R1, comme par exemple un réseau PSTN (éventuellement ADSL), et/ou à un réseau nomade R3, par exemple de type WiFi ou WiMax, et/ou à un réseau local sans fil ou WLAN (pour « Wireless Local Area Network »).

Un réseau IMS permet à des clients abonnés (ou clients IMS comportant un terminal de communication à agent IMS AI) de disposer de services IMS spécifiques gérés par des serveurs d'application, qu'ils soient raccordés au réseau d'accès de l'opérateur auprès duquel ils ont contracté un abonnement (ou un forfait) ou à un réseau d'accès visité dans le cas du « roaming ».

Le mode de fonctionnement d'un réseau IMS est indépendant du réseau d'accès auquel il est connecté, si bien qu'il peut offrir des services aussi bien aux réseaux à connectivité IP qu'à ceux sans connectivité IP. Par conséquent, un réseau IMS permet notamment l'interopérabilité, la prise en compte de la qualité de service, le nomadisme (ou « roaming »), l'intégration et la transparence de services, l'utilisation d'une unique interface de service, et une mobilité à sessions ininterrompues.

Comme cela est illustré sur la figure 1, chaque réseau d'accès Ri (ici, i = 1 à 3) comprend un coeur de réseau muni d'un module appelé GGSN (« Gateway GPRS Serving Node ») Gi connecté au réseau IMS RI. Il est rappelé qu'un module GGSN est un noeud (ou routeur) assurant le rôle d'interface logique entre son réseau d'accès Ri et les réseaux externes, et notamment le coeur de réseau IMS RI. Il assure donc la connectivité de son réseau d'accès avec un ou plusieurs réseaux externes.

Par ailleurs, le réseau IMS est également couplé à une base de données de souscription appelée HSS (pour « Home Subscriber Server ») dans laquelle sont notamment stockées les adresses connues des abonnés aux services IMS qu'il offre.

Le réseau IMS comprend en outre un module appelé S-CSCF (pour « Serving-Call Session Control Function ») qui constitue la porte d'entrée vers les services IMS qu'il offre. Ce module S-CSCF est connecté à un ou plusieurs serveurs d'applications (ou « Application Servers ») SAj (ici j = 1 à 5, mais il peut prendre n'importe quelle valeur supérieure ou égale à deux). Il est notamment chargé de l'authentification des abonnés, et est couplé au HSS afin de récupérer des informations sur les abonnés et d'y stocker les adresses connues desdits abonnés.

Au sein d'un (coeur de) réseau IMS on définit habituellement deux types de serveur d'application SAj. Le premier type regroupe les serveurs comportant au moins une application liée aux communications, comme par exemple les applications de communication instantanée ou différée, les applications de communication de type « 1 vers 1 » ou « 1 vers plusieurs », les applications de communication de données de texte, les applications de communication de données de voix et de vidéo, et les applications de communication de type « push to X » ou appel ou encore vidéo. Le second type regroupe les serveurs comportant une application destinée à faciliter un service (« enabler layer »), comme par exemple les applications de détection de disponibilité et d'accessibilité (ou « presence ») des terminaux d'utilisateur Tk, les applications de facturation (ou « charging »), les applications de contrôle d'accès et d'authentification (ou AAC pour « Authentication and Access Control »), les applications de détermination des positions des terminaux d'utilisateur Tk, les applications de contrôle de la qualité de service (QoS), et les applications de type GLMS (pour « Group and List Management Server » - serveur de gestion de listes et de groupes).

Sur la figure 1, les serveurs d'application du premier type sont matérialisés par des carrés référencés SA1 et SA2, tandis que les serveurs d'application du second type sont matérialisés par des carrés référencés SA3 et SA4.

L'invention propose un dispositif d'optimisation D se présentant de préférence sous la forme d'une application destinée à faire partie d'un serveur d'application (ici SA5) connecté au module S-CSCF du réseau IMS RI. Ce serveur d'application SA5 est plus préférentiellement du second type (enabler layer).

Le dispositif d'optimisation D selon l'invention comprend un module de traitement MT couplé aux autres applications de service AS1 à AS4 (premier et second types) de son réseau IMS RI. Ce module de traitement MT est chargé d'intervenir chaque fois qu'un terminal d'utilisateur Tk, connecté à l'un des réseaux d'accès Ri connectés à son réseau IMS RI, requiert l'accès à un service IMS choisi géré par l'une des applications de service AS1 à AS4. Plus précisément, ce module de traitement MT est chargé d'optimiser l'utilisation de chaque service IMS requis (et géré par l'un des serveurs d'application AS1 à AS4) en fonction, d'une première part, de règles qui sont définies par l'utilisateur requérant et/ou par l'opérateur du réseau d'accès Ri auprès duquel cet utilisateur à contracté un abonnement choisi, d'une deuxième part, des caractéristiques du service requis, et d'une troisième part, des capacités du terminal de cet utilisateur et/ou des caractéristiques de son abonnement et/ou de chaque réseau d'accès qui est susceptible de permettre l'accès du terminal au service requis.

Le module de traitement MT peut être agencé de manière à prendre en compte tout type de caractéristique de service, comme par exemple les besoins de chaque application de service AS1 à AS4 en terme de déploiement, les besoins de chaque application de service AS1 à AS4 en terme d'utilisation par un terminal d'utilisateur Tk, chaque technologie de réseau d'accès que supporte chaque application de service AS1 à AS4, les besoins en terme de qualité de service (QoS), et les SLSs (pour « Service Level Specifications » - spécifications de niveau de service).

Les caractéristiques des services, qui sont gérés par les applications de service des serveurs d'application AS1 à AS4, sont stockées dans des premiers moyens de mémorisation M1. Ces derniers font par exemple partie du dispositif d'optimisation D, comme dans l'exemple illustré sur la figure 1. Dans ce cas, ils sont couplés au module de traitement MT. Mais, cela n'est pas obligatoire. Ils pourraient en effet être externes au dispositif D ainsi qu'au serveur d'application SA5 qui l'héberge, dès lors qu'ils font partie du réseau IMS RI.

Les premiers moyens de mémorisation M1 peuvent se présenter sous n'importe quelle forme, comme par exemple une mémoire ou une base de données ou encore un répertoire.

Le module de traitement MT peut être également agencé de manière à prendre en compte tout type de caractéristique de réseau d'accès Ri, comme par exemple l'accessibilité, les performances théoriques et les performances disponibles de chaque réseau d'accès Ri connecté à son réseau IMS RI, le coût d'utilisation de chaque technologie d'accès, chaque type de service supporté par chaque réseau d'accès Ri connecté à son réseau IMS RI, et chaque éventuel mode de service supporté par chacun desdits types de service.

Les caractéristiques des réseaux d'accès Ri sont stockées dans des deuxièmes moyens de mémorisation M2. Ces derniers font par exemple partie du dispositif d'optimisation D, comme dans l'exemple illustré sur la figure 1. Dans ce cas, ils sont couplés au module de traitement MT. Mais, cela n'est pas obligatoire. Ils pourraient en effet être externes au dispositif D ainsi qu'au serveur d'application SA5 qui l'héberge, dès lors qu'ils font partie du réseau IMS RI, voire même accessible dans le réseau d'accès.

Les deuxièmes moyens de mémorisation M2 peuvent se présenter sous n'importe quelle forme, comme par exemple une mémoire ou une base de données ou encore un répertoire.

Le module de traitement MT peut être également agencé de manière à prendre en compte toute capacité de terminal Tk, comme par exemple les types respectifs des principaux terminaux commercialisés, voire même de tous, et chaque technologie d'accès offerte par chaque type de terminal Tk.

Les caractéristiques des capacités des terminaux Tk sont stockées dans des troisièmes moyens de mémorisation M3. Ces derniers font par exemple partie du dispositif d'optimisation D, comme dans l'exemple illustré sur la figure 1. Dans ce cas, ils sont couplés au module de traitement MT. Mais, cela n'est pas obligatoire. Ils pourraient en effet être externes au dispositif D ainsi qu'au serveur d'application SA5 qui l'héberge, dès lors qu'ils font partie du réseau IMS RI, voire même accessible dans le réseau d'accès.

Les troisièmes moyens de mémorisation M3 peuvent se présenter sous n'importe quelle forme, comme par exemple une mémoire ou une base de données ou encore un répertoire.

Le module de traitement MT peut être également agencé de manière à prendre en compte chaque type d'abonnement (ou forfait) souscrit par chaque utilisateur auprès de chaque réseau d'accès Ri, ainsi que tout type de règle définie par chaque utilisateur en vue d'utiliser l'un des services gérés par les applications de service des serveurs d'application AS1 à AS4.

On notera que dans le cadre de services IMS, chaque opérateur peut mettre à la disposition de ses clients utilisateurs IMS (ou abonnés IMS) des abonnements ou forfaits IMS leur permettant d'accéder à plusieurs types de réseau d'accès, comme par exemple un réseau fixe, un réseau mobile, un réseau xDSL et un réseau nomade, tous connectés à un coeur de réseau IMS RI.

Dans cette hypothèse, chaque opérateur peut disposer de son propre dispositif d'optimisation D implanté dans son propre serveur d'application SA5 ou dans un serveur d'application commun. On peut également envisager qu'un unique dispositif d'optimisation D gère l'optimisation de l'utilisation des services IMS pour l'ensemble des opérateurs.

Une règle d'utilisateur peut par exemple se présenter sous l'une des formes suivantes :
- « utiliser telle qualité de service (QoS) pour tel type de communication »,
- « utiliser en priorité le réseau d'accès le moins coûteux en terme de crédit-temps »,
- « pendant le mois appeler en priorité les téléphones fixes et en l'absence de réponse appeler les téléphones mobiles »,
- « si le temps cumulé des appels vers les téléphones mobiles est supérieur à 30 minutes pendant la dernière semaine du mois, alors appeler en priorité les téléphones mobiles »,
- « si le crédit-temps des appels vers les téléphones mobiles est épuisé (<0) alors interdire les appels non-prioritaires vers les téléphones mobiles ».

De telles règles sont généralement définies en fonction du type d'abonnement (ou de forfait) souscrit par l'utilisateur auprès d'un opérateur. Ainsi les exemples des trois dernières règles mentionnées ci-dessus, peuvent être adaptés au cas où un utilisateur a souscrit pour son téléphone fixe auprès d'un opérateur de réseau d'accès fixe R1 un abonnement mensuel selon lequel chaque appel vers un téléphone fixe coûte 1€, un crédit-temps de deux heures par mois est alloué aux appels vers les téléphones mobiles, et chaque appel vers un téléphone mobile au-delà du crédit-temps coûte 2€.

Les règles des utilisateurs et les types d'abonnement (ou forfait) sont stockés dans des quatrièmes moyens de mémorisation M4. Ces derniers font par exemple partie du dispositif d'optimisation D, comme dans l'exemple illustré sur la figure 1. Dans ce cas, ils sont couplés au module de traitement MT. Mais, cela n'est pas obligatoire. Ils pourraient en effet être externes au dispositif D ainsi qu'au serveur d'application SA5 qui l'héberge, dès lors qu'ils font partie du réseau IMS RI.

Les quatrièmes moyens de mémorisation M4 peuvent se présenter sous n'importe quelle forme, comme par exemple une mémoire ou une base de données ou encore un répertoire.

Le module de traitement MT peut être également agencé de manière à prendre en compte tout type de règle définie par chaque opérateur d'un réseau d'accès Ri, connecté à son réseau IMS RI, en vue d'utiliser l'un des services gérés par les applications de service des serveurs d'application AS1 à AS4.

Une règle d'opérateur peut par exemple concerner une partie d'une politique à appliquer aux utilisateurs en fonction de leur type d'abonnement, par exemple pour définir des préférences d'utilisation de technologies d'accès.

Les règles des opérateurs sont stockées dans des cinquièmes moyens de mémorisation M5. Ces derniers font par exemple partie du dispositif d'optimisation D, comme dans l'exemple illustré sur la figure 1. Dans ce cas, ils sont couplés au module de traitement MT. Mais, cela n'est pas obligatoire. Ils pourraient en effet être externes au dispositif D ainsi qu'au serveur d'application SA5 qui l'héberge, dès lors qu'ils font partie du réseau IMS RI.

Les cinquièmes moyens de mémorisation M5 peuvent se présenter sous n'importe quelle forme, comme par exemple une mémoire ou une base de données ou encore un répertoire.

Dans une première variante, les quatrièmes M4 et cinquièmes M5 moyens de mémorisation peuvent éventuellement constituer deux sous-parties d'un même moyen de mémorisation.

Dans une deuxième variante, les troisièmes M3 et quatrièmes M4 moyens de mémorisation peuvent constituer deux sous-parties d'un même moyen de mémorisation.

Dans une troisième variante, les deuxièmes M2 et cinquièmes M5 moyens de mémorisation peuvent constituer deux sous-parties d'un même moyen de mémorisation.

Bien que cela n'apparaisse pas sur la figure 1, on peut éventuellement adjoindre au dispositif d'optimisation D une interface graphique, par exemple de type GUI (« Graphical User Interface »), afin de permettre aux utilisateurs et/ou aux opérateurs de définir leurs règles respectives. Cette interface graphique peut être offerte via la fonction de ressources multimédia (ou MRF pour « Multimedia Resource Function ») que met généralement en oeuvre un réseau IMS.

Le module de traitement MT peut par exemple comporter un élément MR choisi parmi un moteur de règles (ou « rule engine »), un système expert et un système d'optimisation, et chargé, chaque fois qu'il reçoit la définition d'un service requis par un terminal d'utilisateur Tk, d'accéder aux moyens de mémorisation M1 à M5 afin de déterminer toutes les informations nécessaires à l'optimisation dudit service. Parmi ces informations, on peut notamment citer les réseaux d'accès Ri qui sont accessibles au terminal requérant Tk compte tenu de son type et/ou des technologies d'accès dont il dispose, les données relatives aux performances disponibles et à l'accessibilité des réseaux d'accès, les technologies d'accès, les performances de réseau d'accès, et l'éventuelle qualité de service nécessaires au service requis, les règles définies par l'utilisateur du terminal requérant Tk et concernées par le service requis, chaque type d'abonnement (ou forfait) souscrit par l'utilisateur du terminal requérant Tk, et les règles définies par l'opérateur auprès duquel l'utilisateur du terminal requérant Tk a souscrit un abonnement et qui sont concernées par le service requis.

Une fois en possession de toutes ses informations, le moteur de règles (ou système expert ou système d'optimisation) MR peut alors déterminer le réseau d'accès Ri qui est accessible et dont on peut utiliser la technologie de réseau d'accès qui est supportée par le terminal requérant Tk et qui est la mieux adaptée à l'utilisation du service requis, compte tenu de ses besoins en termes de déploiement et d'utilisation, de l'abonnement de l'utilisateur du terminal requérant Tk qui correspond à la technologie d'accès choisie, et des règles qui ont été définies par l'opérateur et/ou l'utilisateur.

Une fois que le module de traitement MT a effectué son choix de technologie d'accès et de réseau d'accès Ri, et qu'il a déterminé chaque règle concernée par le service requis, il dispose d'informations « finales ». Il contacte alors le serveur d'application SAj, qui héberge l'application qui gère le service que le terminal requérant Tk souhaite utiliser, afin de lui communiquer les informations finales, nécessaires à l'utilisation optimale du service requis. C'est alors ce serveur d'application SAj qui contrôle la mise à disposition du terminal requérant Tk du service requis, conformément aux informations finales reçues.

Il est important de noter que le module de traitement MT peut être agencé de manière à intervenir en cours d'utilisation d'un service. Cela peut en effet être utile chaque fois qu'un terminal d'utilisateur n'est plus en mesure d'utiliser la technologie d'accès que le dispositif D lui avait choisie, par exemple du fait qu'il s'est déplacé et/ou que le réseau d'accès Ri jusqu'alors utilisé ne dispose plus de suffisamment de ressources et/ou qu'il ne dispose plus de suffisamment de crédit-temps.

Ce type d'intervention est destiné à permettre la détermination de nouvelles informations finales compte tenu de la réactualisation des informations stockées dans certains au moins des moyens de mémorisation M1 à M5.

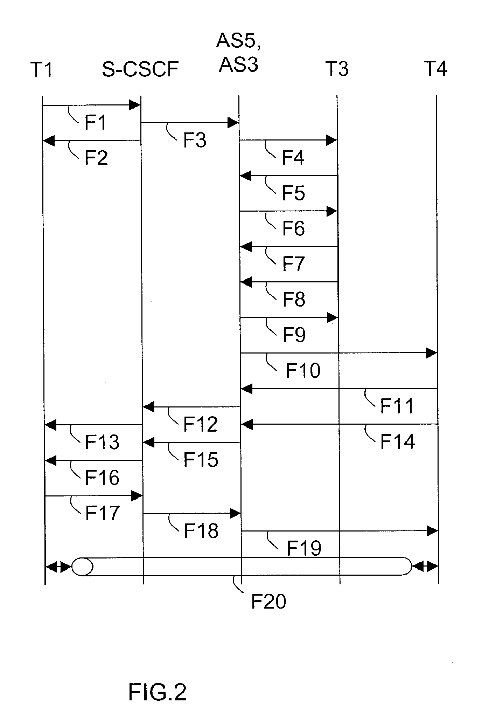

Trois exemples d'utilisation optimisée de services vont être décrits maintenant en référence aux figures 2 à 4. Ces trois exemples d'utilisation de service correspondent à une situation dans laquelle un premier utilisateur (disposant d'un téléphone fixe T1 et d'un téléphone mobile T2) requiert l'établissement d'une communication entre son terminal fixe T1 et un terminal d'un second utilisateur (disposant d'un téléphone fixe T3 et d'un téléphone mobile T4). On considère par ailleurs que le premier utilisateur a contracté auprès de l'opérateur du réseau d'accès fixe R1 un abonnement mensuel selon lequel chaque appel vers un téléphone fixe coûte 1€, un crédit-temps de deux heures par mois est alloué aux appels vers les téléphones mobiles, et chaque appel vers un téléphone mobile au-delà du crédit-temps coûte 2€. On considère enfin que le premier utilisateur a défini l'ensemble de règles suivantes : « pendant le mois appeler en priorité les téléphones fixes et en l'absence de réponse appeler les téléphones mobiles », « si le temps cumulé des appels vers les téléphones mobiles est supérieur à 30 minutes pendant la dernière semaine du mois, alors appeler en priorité les téléphones mobiles », et « si le crédit-temps des appels vers les téléphones mobiles est épuisé (<0) alors interdire les appels non-prioritaires vers les téléphones mobiles ».

Le premier exemple d'utilisation de service illustré sur la figure 2 correspond à la situation dans laquelle, d'une part, le premier utilisateur se trouve au milieu de son mois d'abonnement et n'a pas épuisé son crédit-temps d'appels vers les téléphones mobiles, et d'autre part, le terminal fixe T3 du second utilisateur ne répond pas.

Dans une première étape F1, le terminal fixe T1 transmet un premier message (par exemple de type « Invite ») demandant l'établissement d'une communication avec le second utilisateur (désigné). Ce message parvient dans le module S-CSCF du réseau IMS RI.

Dans une deuxième étape F2, le module S-CSCF transmet un deuxième message (par exemple de type « 100 » ou « Trying ») au téléphone fixe T1 pour lui dire qu'il tente d'établir la communication requise.

Dans une troisième étape F3, le module S-CSCF retransmet le premier message (par exemple de type « Invite ») au serveur d'application SA5 qui contient le dispositif d'optimisation D selon l'invention. Ce dernier procède à la détermination des informations finales relatives au service requis et les transmet au serveur d'application (par exemple SA3) qui héberge l'application gérant le service d'établissement de communication requis. Ce mode de fonctionnement convient tout particulièrement aux applications de type dit « back-to-back », telles que celles de pré-paiement. Pour d'autres types d'applications, le dispositif d'optimisation D peut transmettre les informations finales directement au module S-CSCF qui contrôle les services IMS d'un utilisateur.

Conformément aux règles définies par le premier utilisateur, le téléphone fixe T3 du second utilisateur doit être appelé en priorité. Par conséquent, dans une quatrième étape F4, le serveur d'application SA3 retransmet le premier message (par exemple de type « Invite ») au téléphone fixe T3 du second utilisateur. A réception de ce premier message, le téléphone fixe T3 déclenche sa sonnerie.

Puis, dans une cinquième étape F5, le téléphone fixe T3 adresse au serveur d'application SA3 (en charge du service de communication) un troisième message (par exemple de type « 180 » ou « Ringing ») afin de lui indiquer que la sonnerie est en cours.

L'application gérant le service de communication dans le serveur d'application SA3 attend alors quelques instants. Ne recevant pas de nouveau message du téléphone fixe T3, elle en déduit que le second utilisateur ne répond pas, puis elle décide de mettre fin à la tentative d'établissement de communication avec le téléphone fixe T3 pour tenter d'établir une communication avec le téléphone mobile T4 du second utilisateur, conformément aux règles définies par le premier utilisateur (transmises sous forme d'informations finales par le serveur d'application SA5). Dans une sixième étape F6, le serveur d'application SA3 transmet au téléphone fixe T3 un quatrième message (par exemple de type « Cancel ») afin d'annuler la procédure d'établissement de communication précédemment initiée.

A réception de ce quatrième message, le téléphone fixe T3 interrompt les sonneries, puis dans une septième étape F7 il transmet au serveur d'application SA3 un cinquième message (par exemple de type « 200 » ou « OK ») afin de lui indiquer qu'il a interrompu la sonnerie. Puis, dans une huitième étape F8 le téléphone fixe T3 transmet au serveur d'application SA3 un sixième message (par exemple de type « 487 » ou « Request terminated ») afin de lui indiquer qu'il a mis fin à la tentative d'établissement de communication. Dans une neuvième étape F9, le serveur d'application SA3 transmet au téléphone fixe T3 un septième message (par exemple de type « ACK ») afin d'accuser réception du sixième message (F8).

En raison des règles définies par l'utilisateur et précédemment reçues, le serveur d'application SA3 sait qu'il doit désormais essayer d'établir une communication entre le téléphone fixe T1 du premier utilisateur et le téléphone mobile T4 du second utilisateur. Dans une dixième étape F10, il transmet alors au téléphone mobile T4 un huitième message (par exemple de type « Invite ») afin d'initier l'établissement d'une communication.

Puis, dans une onzième étape F11, le téléphone mobile T4 adresse au serveur d'application SA3 (en charge du service de communication) un neuvième message (par exemple de type « 180 » ou « Ringing ») afin de lui indiquer que la sonnerie est en cours.

Une fois que le serveur d'application SA3 a reçu le neuvième message, il le retransmet au module S-CSCF dans une douzième étape F12. Puis, une fois que le module S-CSCF a reçu à son tour le neuvième message, il le retransmet au téléphone fixe T1 du premier utilisateur dans une treizième étape F13.

Lorsque le second utilisateur accepte la communication avec son téléphone mobile T4, ce dernier transmet au serveur d'application SA3, dans une quatorzième étape F14, un dixième message (par exemple de type « 200 » ou « OK ») afin de lui indiquer que la communication a été acceptée.

Une fois que le serveur d'application SA3 a reçu le dixième message, il le retransmet au module S-CSCF dans une quinzième étape F15. Puis, une fois que le module S-CSCF a reçu à son tour le dixième message, il le retransmet au téléphone fixe T1 du premier utilisateur dans une seizième étape F16.

Dans une dix-septième étape F17, le téléphone fixe T1 transmet au téléphone fixe T3 un onzième message (par exemple de type « ACK ») afin d'accuser réception du dixième message (F16). Une fois que le module S-CSCF a reçu le onzième message, il le retransmet au serveur d'application SA3 dans une dix-huitième étape F18. Puis, une fois que le serveur d'application SA3 a reçu à son tour le onzième message (F18), il le retransmet au téléphone mobile T4 dans une dix-neuvième étape F19. La communication entre le téléphone fixe T1 et le téléphone mobile T4 peut alors se faire dans une vingtième étape F20 au moyen du protocole RTP, par exemple sous la forme de flux média.

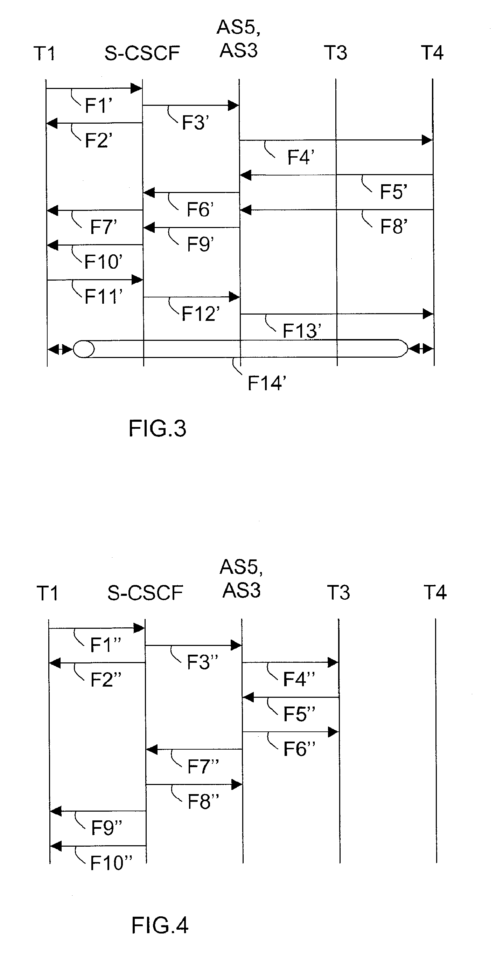

Le deuxième exemple d'utilisation de service illustré sur la figure 3 correspond à la situation dans laquelle le premier utilisateur se trouve dans la dernière semaine de son mois d'abonnement et dispose encore d'un crédit-temps d'appel vers les téléphones mobiles égal à 50 minutes.

Dans une première étape F1', le terminal fixe T1 transmet un premier message (par exemple de type « Invite ») demandant l'établissement d'une communication avec le second utilisateur (désigné). Ce message parvient dans le module S-CSCF du réseau IMS RI.

Dans une deuxième étape F2', le module S-CSCF transmet un deuxième message (par exemple de type « 100 » ou « Trying ») au téléphone fixe T1 pour lui dire qu'il tente d'établir la communication requise.

Dans une troisième étape F3', le module S-CSCF retransmet le premier message (par exemple de type « Invite ») au serveur d'application SA5 qui contient le dispositif d'optimisation D selon l'invention. Ce dernier procède à la détermination des informations finales relatives au service requis et les transmet au serveur d'application (par exemple SA3) qui héberge l'application gérant le service d'établissement de communication requis.

Ce mode de fonctionnement convient tout particulièrement aux applications de type dit « back-to-back », telles que celles de pré-paiement. Pour d'autres types d'applications, le dispositif d'optimisation D peut transmettre les informations finales directement au module S-CSCF qui contrôle les services IMS d'un utilisateur.

Conformément aux règles définies par le premier utilisateur, le téléphone mobile T4 du second utilisateur doit être appelé en priorité du fait que l'on est dans la dernière semaine du mois d'abonnement et que le crédit-temps d'appel vers les téléphones mobiles est supérieur à 30 minutes. Par conséquent, dans une quatrième étape F4', le serveur d'application SA3 retransmet au téléphone mobile T4 le premier message (par exemple de type « Invite ») afin d'initier l'établissement d'une communication.

Puis, dans une cinquième étape F5', le téléphone mobile T4 adresse au serveur d'application SA3 (en charge du service de communication) un troisième message (par exemple de type « 180 » ou « Ringing ») afin de lui indiquer que la sonnerie est en cours.

Une fois que le serveur d'application SA3 a reçu le troisième message, il le retransmet au module S-CSCF dans une sixième étape F6'. Puis, une fois que le module S-CSCF a reçu à son tour le troisième message, il le retransmet au téléphone fixe T1 du premier utilisateur dans une septième étape F7'.

Lorsque le second utilisateur accepte la communication avec son téléphone mobile T4, ce dernier transmet au serveur d'application SA3, dans une huitième étape F8', un quatrième message (par exemple de type « 200 » ou « OK ») afin de lui indiquer que la communication a été acceptée.

Une fois que le serveur d'application SA3 a reçu le quatrième message, il le retransmet au module S-CSCF dans une neuvième étape F9'. Puis, une fois que le module S-CSCF a reçu à son tour le quatrième message, il le retransmet au téléphone fixe T1 du premier utilisateur dans une dixième étape F10'.

Dans une onzième étape F11', le téléphone fixe T1 transmet au téléphone fixe T3 un cinquième message (par exemple de type « ACK ») afin d'accuser réception du quatrième message (F10'). Une fois que le module S-CSCF a reçu le cinquième message, il le retransmet au serveur d'application SA3 dans une douzième étape F12'. Puis, une fois que le serveur d'application SA3 a reçu à son tour le cinquième message (F12'), il le retransmet au téléphone mobile T4 dans une treizième étape F13'. La communication entre le téléphone fixe T1 et le téléphone mobile T4 peut alors se faire dans une quatorzième étape F14' au moyen du protocole RTP, par exemple sous la forme de flux média.

Le troisième exemple d'utilisation de service illustré sur la figure 4 correspond à la situation dans laquelle, d'une part, le premier utilisateur a épuisé son crédit-temps d'appel vers les téléphones mobiles, et d'autre part, la communication n'est pas urgente (ou prioritaire).

Dans une première étape F1", le terminal fixe T1 transmet un premier message (par exemple de type « Invite ») demandant l'établissement d'une communication avec le second utilisateur (désigné). Ce message parvient dans le module S-CSCF du réseau IMS RI.

Dans une deuxième étape F2", le module S-CSCF transmet un deuxième message (par exemple de type « 100 » ou « Trying ») au téléphone fixe T1 pour lui dire qu'il tente d'établir la communication requise.

Dans une troisième étape F3", le module S-CSCF retransmet le premier message (par exemple de type « Invite ») au serveur d'application SA5 qui contient le dispositif d'optimisation D selon l'invention. Ce dernier procède à la détermination des informations finales relatives au service requis et les transmet au serveur d'application (par exemple SA3) qui héberge l'application gérant le service d'établissement de communication requis.

Ce mode de fonctionnement convient tout particulièrement aux applications de type dit « back-to-back », telles que celles de pré-paiement. Pour d'autres types d'applications, le dispositif d'optimisation D peut transmettre les informations finales directement au module S-CSCF qui contrôle les services IMS d'un utilisateur.

Conformément aux règles définies par le premier utilisateur, seul le téléphone fixe T3 du second utilisateur doit être appelé. Par conséquent, dans une quatrième étape F4", le serveur d'application SA3 retransmet le premier message (par exemple de type « Invite ») au téléphone fixe T3 du second utilisateur.

Ici, on considère que le second utilisateur est momentanément injoignable. Par conséquent, lorsque le téléphone fixe T3 reçoit le premier message, il adresse au serveur d'application SA3 (en charge du service de communication), dans une cinquième étape F5", un troisième message (par exemple de type « 480 » ou « Temporary unavailable ») afin de lui indiquer que son (second) utilisateur est injoignable.

Dans une sixième étape F6", le serveur d'application SA3 transmet au téléphone fixe T3 un quatrième message (par exemple de type « ACK ») afin d'accuser réception du troisième message (F5").

Conformément aux règles définies par le premier utilisateur, le téléphone mobile T4 du second utilisateur ne peut pas être appelé. Par conséquent, dans une septième étape F7", le serveur d'application SA3 retransmet au module S-CSCF le troisième message (par exemple de type « 480 » ou « Temporary unavailable »). A réception de ce troisième message, le module S-CSCF adresse au serveur d'application SA3, dans une huitième étape F8", un huitième message (par exemple de type « ACK ») afin d'accuser réception du troisième message (F7").

Puis, dans une neuvième étape F9", le module S-CSCF retransmet au téléphone fixe T1 du premier utilisateur le troisième message (par exemple de type « 480 » ou « Temporary unavailable »). A réception de ce troisième message, le téléphone fixe T1 adresse au module S-CSCF, dans une dixième étape F10", un sixième message (par exemple de type « ACK ») afin d'accuser réception du troisième message (F9"). La procédure s'interrompt à ce stade, sans qu'une communication ait pu être établie.

Le dispositif d'optimisation D selon l'invention, et notamment son module de traitement MT et ses éventuels moyens de mémorisation M1 à M5, peuvent être réalisés sous la forme de circuits électroniques, de modules logiciels (ou informatiques), ou d'une combinaison de circuits et de logiciels.

L'invention offre plusieurs avantages, parmi lesquels :
- une meilleure gestion pour les utilisateurs de leurs abonnements (ou forfaits) et des technologies d'accès offertes par leurs terminaux de communication,
- la possibilité de gérer et d'optimiser les ressources des opérateurs des réseaux d'accès,
- une réduction des coûts pour les opérateurs des réseaux d'accès et pour leurs clients utilisateurs, en raison d'un partage des tâches entre réseaux d'accès.

L'invention ne se limite pas aux modes de réalisation de dispositif d'optimisation et de serveur d'application décrits ci-avant, seulement à titre d'exemple, mais elle englobe toutes les variantes que pourra envisager l'homme de l'art dans le cadre des revendications ci-après.

## Revendications

1. Dispositif d'optimisation (D) pour un coeur de réseau de type IMS (RI) couplé à des applications de service et à au moins deux réseaux d'accès (Ri) de types différents, **caractérisé en ce qu'**il comprend des moyens de traitement (MT) couplés auxdites applications de service et agencés, lorsqu'un terminal d'utilisateur (Tk) connecté à l'un desdits réseaux d'accès (Ri) requiert l'accès à un service choisi, géré par l'une desdites applications de service, pour optimiser l'utilisation dudit service requis en fonction de règles définies par cet utilisateur et/ou par un opérateur de réseau d'accès auprès duquel ledit utilisateur à contracté un abonnement choisi, des caractéristiques dudit service requis, et des capacités dudit terminal (Tk) et/ou des caractéristiques dudit abonnement et/ou de chaque réseau d'accès susceptible de permettre l'accès du terminal (Tk) audit service requis.

2. Dispositif selon la revendication 1, **caractérisé en ce qu'**il comprend des premiers moyens de mémorisation (M1) propres à stocker lesdites caractéristiques de service.

3. Dispositif selon l'une des revendications 1 et 2, **caractérisé en ce que** lesdites caractéristiques de service sont choisies dans un groupe comprenant au moins des besoins pour être déployé, des besoins pour permettre une utilisation par un terminal d'utilisateur (Tk), des besoins en terme de qualité de service, et au moins une technologie de réseau d'accès (Ri) supportée.

4. Dispositif selon l'une des revendications 1 à 3, **caractérisé en ce qu'**il comprend des deuxièmes moyens de mémorisation (M2) propres à stocker lesdites caractéristiques des réseaux d'accès (Ri).

5. Dispositif selon l'une des revendications 1 à 4, **caractérisé en ce que** lesdites caractéristiques des réseaux d'accès (Ri) sont choisies dans un groupe comprenant au moins une accessibilité, des performances théoriques, des performances disponibles, au moins un type de service supporté, au moins un mode de service supporté, et des coûts d'utilisation de chaque technologie d'accès supportée.

6. Dispositif selon l'une des revendications 1 à 5, **caractérisé en ce qu'**il comprend des troisièmes moyens de mémorisation (M3) propres à stocker lesdites capacités des terminaux (Tk).

7. Dispositif selon l'une des revendications 1 à 6, **caractérisé en ce que** lesdites capacités des terminaux (Tk) sont choisies dans un groupe comprenant au moins un type et au moins une technologie d'accès offerte.

8. Dispositif selon l'une des revendications 1 à 7, **caractérisé en ce qu'**il comprend des quatrièmes moyens de mémorisation (M4) propres à stocker lesdites règles définies par les utilisateurs et/ou chaque type d'abonnement souscrit par chaque utilisateur auprès de chaque réseau d'accès (Ri).

9. Dispositif selon l'une des revendications 1 à 8, **caractérisé en ce qu'**il comprend des cinquièmes moyens de mémorisation (M5) propres à stocker lesdites règles définies par les opérateurs de réseau d'accès.

10. Dispositif selon l'une des revendications 1 à 9, **caractérisé en ce que** lesdits moyens de traitement (MT) comportent un élément (MR), choisi dans un groupe comprenant au moins un moteur de règles, un système expert et un système d'optimisation, et agencé, en cas de réception d'une définition de service requis par un terminal d'utilisateur, à accéder auxdits moyens de mémorisation (M1-M5) de manière à déterminer chaque réseau d'accès (Ri) accessible et optimal et chaque technologie de réseau d'accès à utiliser, compte tenu des besoins en termes de déploiement et d'utilisation dudit service, des règles définies par l'opérateur et/ou l'utilisateur, des capacités dudit terminal d'utilisateur (Tk), et de chaque abonnement souscrit par ledit utilisateur.

11. Serveur d'application (SA5) pour un coeur de réseau de type IMS (RI) couplé à des applications de service et à au moins deux réseaux d'accès (Ri) de types différents, **caractérisé en ce qu'**il comprend un dispositif d'optimisation (D) selon l'une des revendications précédentes.
